# FASCICULE DE BREVET EUROPEEN

(11) **EP 2 517 045 B1**
(45) Date de publication et mention de la délivrance du brevet: **11.05.2016**
(21) Numéro de dépôt: 10788353.0
(22) Date de dépôt: 17.12.2010
(51) Int. Cl.: G01S 13/78

(54) **DISPOSITIF AMELIORE INTERROGATEUR IFF**
VERBESSERTER IFF-INTERROGATOR
IMPROVED IFF INTERROGATOR DEVICE

(30) Priorité: 21.12.2009 FR 0906217
(43) Date de publication de la demande: 31.10.2012
(73) Titulaire: THALES, 92400 Courbevoie (FR)
(72) Inventeur: SOULA, Stéphane, 92700 Colombes (FR); BOULANGER, Emilie, 92700 Colombes (FR)
(74) Mandataire: Dudouit, Isabelle
(86) Numéro de dépôt international: PCT/EP2010/070144
(87) Numéro de publication internationale: WO 2011/076697

(56) Documents cités:
- US-A- 3 949 397
- US-A- 5 745 575

## Description

L'objet de l'invention concerne un dispositif pour optimiser les interrogations pour des modes donnés dans le cadre d'interrogateur amiennemi (ou IFF pour Interrogation Friend and Foe).

Elle s'applique, par exemple, dans le cas d'interrogation en Mode 5 et en Mode Mk XII/S afin d'optimiser les performances des systèmes d'interrogation. Les caractéristiques des différents modes étant explicitées ci-après.

De manière plus générale, le procédé peut s'appliquer dans le cadre des interrogations IFF utilisant deux modes d'interrogations cadencés à des rythmes de transmission différents et ayant des motifs répétés dans le temps.

Pour des interrogateurs IFF fonctionnant avec une antenne tournante, le nombre d'interrogations émis en direction d'un répondeur (nb coups au but) est notamment fonction de :
- l'ouverture de l'antenne (EBW ( °) 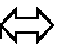 abréviation anglo-saxonne de Effective Beam Width),
- la vitesse de rotation de l'antenne (Vit-Ant ° /S),
- la périodicité des interrogations (PRF (Hz) 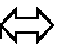 abréviation anglo-saxonne de « Pulse Répetition Frequency »).
nb coups au but = (EBW x PRF) / Vit-Ant
De cette équation il résulte que pour une vitesse d'antenne et une ouverture d'antenne EBW données, le nombre de coups au but est fonction de la périodicité des interrogations ou PRF.

Pour les différents modes, afin de limiter la charge des répondeurs et la « pollution » hertzienne, la périodicité des interrogations est contrainte par des documents normatifs.

| Mode | Documents | Valeur |
|---|---|---|
| 1, 2, 3/A et 4 | STANAG 4193, Part 1 - §3.2.5 | 450 Hz |
| S | STANAG 4193, Part 4 - §3.2.6 | 250 Hz |
| | OACI annex 10 vol III - §31.2.11.1.1 | |
| 5 | STANAG 4193, Part 5 - §3.2.5 | 225 Hz |

Il résulte des points listés ci-dessus que l'emploi de Mode 5 avec d'autres modes est pénalisant en termes de performances d'identification en raison de la réduction du nombre de coups au but induite par le STANAG. A minima, en Mode 5, 6 coups au but sont souhaités et 9 en mode MkXII 10.

Pour interroger avec un mode MkXII et un format mode 5, selon le STANAG 4193 part 5, l'art antérieur décrit des méthodes dans lesquelles, il est possible :
- d'interroger un mode par tour,
- de réaliser de l'entrelacement de modes,
- de réaliser un supermode (1 interrogation mode 5 + 1 interrogation MkXII sur la même PRF),
- de réaliser des interrogations asynchrones.
Malgré les avantages et les résultats qu'elles offrent les méthodes de l'art antérieur présentent les limitations suivantes :

### Interroger un mode par tour

Tour N, Emission de modes selon le motif : m5, m5, m5, m5, ....

Tour N+1, Emission de modes selon le motif : m1, m1, m1, m1,.

Tour N+2, Emission de modes selon le motif : m3, m3, m3, m3, Pour un interrogateur avec une vitesse d'antenne de 360°/set une ouverture de 15°.

| tour | Modes utilisés | PRF | Nb coups au but | Identification |
|---|---|---|---|---|
| N | M5, m5, m5, .... | 225 | m5 : 9,3 | OK |
| N + 1 | M1, m1, m1, m1, m1, .... | 450 | m1 : 18,8 | OK |
| N + 2 | M3, m3, m3, m3, .... | 450 | m3 : 18,8 | Ok |

Il est nécessaire de réaliser 3 tours pour obtenir les résultats pour tous les modes interrogés.

### Entrelacement des modes

Dans le cas de l'utilisation d'un entrelacement de modes tel que défini par le Stanag 4193 part 5 au §3.2.6.1, les modes d'interrogations sont alternés, avec une fréquence de cycle de 225 Hz.
Cas 1 : Emission de modes selon le motif : m5, m1, m5, m3, m5, ....
Cas 2 : tour N, Emission de modes selon le motif : m5, m1, m5, m1, m5, ....
tour N+1, Emission de modes selon le motif : m5, m3, m5, m3, m5. Pour un interrogateur avec une vitesse d'antenne de 360°/set une ouverture de 15°.

| Tour | Modes utilisés | PRF | Nb coups au but | Identification |
|---|---|---|---|---|
| CAS 1 | m5, m1, m5, m3, ... | m5 : 112,5 Hz | m5 : 4,7 | **KO** |
| | | m1 : 56.25 Hz | m1 : 2,3 | **KO** |
| | | m3 : 56.25 Hz | m3 : 2.3 | **KO** |
| CAS 2 : | | | | |
| N | m5, m1, m5, m1, ... | m5 : 112,5 Hz | m5 : 4,7 | **KO** |
| | | m1 : 112,5 Hz | m1 : 4.7 | **KO** |
| N + 1 | m5, m3, m5, m3, ... | m5 : 112,5 Hz | m5 : 4,7 | **KO** |
| | | m3 : 112,5 Hz | m3 : 4.7 | **KO** |

Dans les configurations d'interrogation n°1 et n°2,il est impossible d'obtenir les résultats satisfaisants pour tous les modes.

### Supermode

Utilisation du Supermode tel que défini par le STANAG 4193 part 5 au §3.2.6.2, Une interrogation MkXII est sur la même récurrence que l'interrogation mode 5, avec une fréquence de 225 Hz.
Cas 1 : Emission de modes selon le motif suivant : [m5 / m1], [m5 / m3], [m5 / m1], ....
Cas 2 : tour N, Emission de modes selon le motif suivant : [m5 / m1], [m5 / m1], [m5 / m1], ....
tour N+1, Emission de modes selon le motif suivant : [m5 / m3], [m5 / m3], [m5 / m3], ....
Pour un interrogateur avec une vitesse d'antenne de 360° /set une ouverture de 15°.

| Tour | Modes utilisés | PRF | Nb coups au but | Identification |
|---|---|---|---|---|
| CAS 1 | [m5 / m1], [m5 / m3], [m5 / m1], .... | m5 : 225 Hz | m5 : 9.3 | OK |
| | | m1 : 112,5Hz | m1 : 4.7 | **KO** |
| | | m3 : 112,5 Hz | m3 : 4.7 | **KO** |
| CAS 2 : | | | | |
| N | [m5 / m1], [m5 / m1], [m5 / m1], .... | m5 : 225 Hz | m5 : 9.3 | OK |
| | | m1 : 225 Hz | m1 : 9.3 | OK |
| N + 1 | [m5 / m3], [m5 / m3], [m5 / m3], .... | m5 : 225 Hz | m5 : 9.3 | OK |
| | | m3 : 225 Hz | m3 : 9.3 | OK |

Dans la configuration d'interrogation n°1, il est impossible d'obtenir les résultats satisfaisants pour les modes SIF, (mode 1, mode3).

Dans la configuration d'interrogation n°2, il est nécessaire de réaliser **2 tours** pour obtenir les résultats pour tous les modes interrogés.

### Interrogations Asynchrones

Utilisation du mode Asynchrone tel que défini par le STANAG 4193 part 5 au §3.2.6.3. Une interrogation MkXII est émise pendant la fenêtre de réception du mode 5.
Cas 1 : Emission de modes selon le motif suivant : m5 - m1, m5 - m3, m5-m1, ....
Cas 2 : tour N, Emission de modes selon le motif suivant : m5 - m1, m5-m1, m5 - m1, ....
tour N+1, Emission de modes selon le motif suivant : m5 - m3, m5 - m3, m5 - m3, ....
Pour un interrogateur avec une vitesse d'antenne de 360°/set une ouverture de 15°.

| Tour | Modes utilisés | PRF | Nb coups au but | Identification |
|---|---|---|---|---|
| CAS 1 | m5 - m1, m5 - m3, m5 - | m5 : 225 Hz | m5 : 9.3 | OK |
| | m1, .... | m1 : 112,5 Hz | m1 : 4.7 | **KO** |
| | | m3 : 112,5 Hz | m3 : 4.7 | **KO** |
| CAS 2 : | | | | |
| N | m5 - m1, m5 - m1, m5 - | m5 : 225 Hz | m5 : 9.3 | OK |
| | m1, .... | m1 : 225 Hz | m1 : 9.3 | OK |
| N + 1 | m5 - m3, m5 - m3, m5 - | m5 : 225 Hz | m5 : 9.3 | OK |
| | m3, .... | m3 : 225 Hz | m3 : 9.3 | OK |

Dans la configuration d'interrogation n°1, il est impossible d'obtenir les résultats satisfaisants pour les modes SIF.

Dans la configuration d'interrogation n°2, il est nécessaire de réaliser **2 tours** pour obtenir les résultats pour tous les modes interrogés.

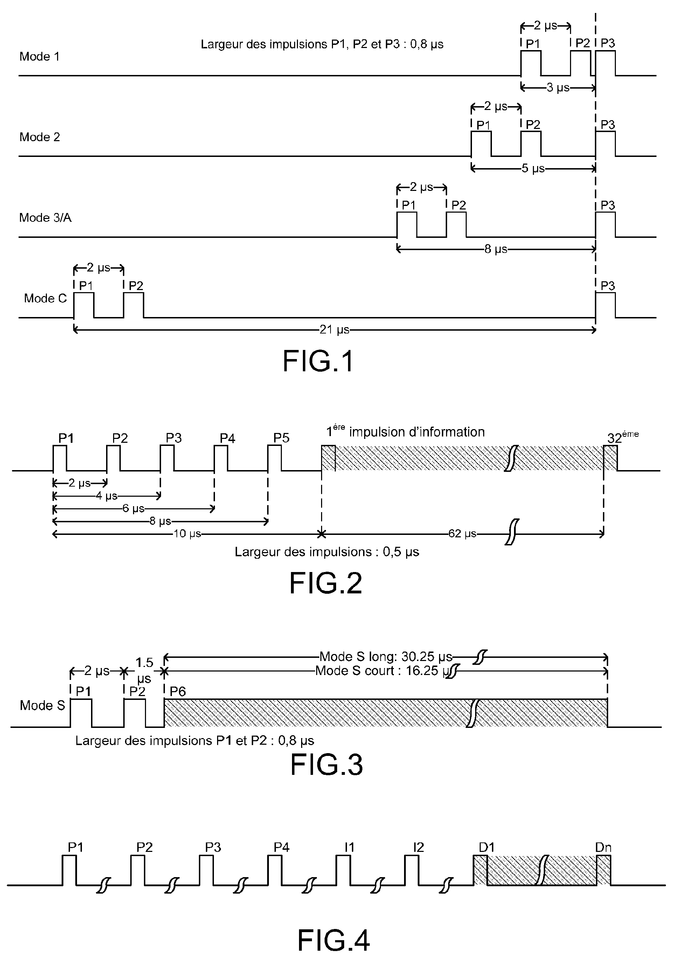

Pour rappel, les formes des modes d'interrogation précités sont rappelés aux figures 1, 2, 3 et 4.

La figure 1 correspond au mode MK XA, Stanag 4193 Part1 §3.2.1.3.1

Les impulsions sont repérées par les lettres P1, P2, P3 ; la largeur des impulsions est par exemple de 0,8 µs. Le codage du mode d'interrogation se fait via l'espacement P1-P3. L'impulsion P2 est fixe par rapport à P1 et permet à un répondeur de se situer par rapport à l'axe de l'antenne. Les modes utilisés sont le mode 1, le mode 2, le mode 3/A et le mode C.

La figure 2 correspond au mode Stanag 4193 Part1 § 3.2.1.5.1. Les positions des 5 premières impulsions P1, P2, P3, P4, P5sont fixes et définissent une interrogation Mode 4, les informations sont transmises via un codage de la position des impulsions suivantes.

La figure 3 schématise le Mode S, Stanag 4193 Part4 § 3.2.1.2.2. Le mode S long a une durée de 30,25 µs et le mode S court une durée de 16,25 µs. La largeur des impulsions est de 0,8 µs.

Dans ce mode, la position des deux premières impulsions P1, P2 est fixe et définit une interrogation Mode S, les informations sont transmises via une modulation DPSK (abréviation anglo-saxonne de Differential phase shift keying) du contenu des impulsions.

La figure 4 schématise l'émission des impulsions pour le Mode 5, Stanag 4193 Part 4§2.3.1 dans lequel les positions des impulsions de préambule sont variables. Les informations sont transmises via une modulation MSK (Minimum Shift Keying) du contenu des impulsions.

La figure 5 représente un exemple de hiérarchisation des différents modes.

Malgré la performance des méthodes de l'art antérieur, la mise en oeuvre simultanée de mode 5 et de mode MkXII sur des interrogateurs IFF utilisant des antennes tournantes implique une dégradation des performances de temps d'identification sur les modes MkXII.

Le document US 3 949 397 concerne les systèmes IFF-Classique "STANAG 4193" et propose une évolution visant à supprimer les risques d'intrusions via des réémissions de réponses AMI. Pour ce faire il est proposé de coder en fonction du temps les questions / réponses.

Le document US 5 745 575 concerne un système d'identification AIR/SOL combinant le Laser pour "sélectionner" une cible et la RF pour dialoguer et effectuer les échanges permettant l'identification. Il s'agit de donner à un "avion" la capacité de savoir, grâce au laser qui permet de n'illuminer qu'un véhicule, si ce véhicule est ami ou non.

Le procédé selon l'invention concerne une nouvelle approche qui va être d'exploiter, en combinant de manière spécifique, les possibilités de génération des interrogations mode 5 offertes par le STANAG 4193 Part 5. Cette capacité est notamment obtenue au moyen d'un traitement numérique de la synchronisation des interrogations.

L'invention concerne un dispositif d'interrogation amélioré dans un système interrogation-réponse de type IFF, ledit dispositif d'interrogation est caractérisé en ce qu'il comporte en combinaison au moins les éléments suivants un premier séquenceur et un deuxième séquenceur, lesdits séquenceurs comprenant chacun un limiteur en fréquence calés respectivement sur une première fréquence F1 correspondant à un premier mode d'émission M1 et une deuxième fréquence F2 calée sur un deuxième mode d'émission M2, ledit système comporte un module de synchronisation permettant la transmission simultanée au niveau du premier séquenceur et au niveau du deuxième séquenceur d'une même fréquence de synchronisation Fs correspondant à une périodicité des interrogations.

Selon un premier mode de réalisation, le premier séquenceur comprend un module d'émission pour le Mode 5 du stanag comprenant un premier limiteur de fréquence calé sur la fréquence 225 Hz et le deuxième séquenceur comprend un module d'émission pour le mode Mk XII/S, comprenant un limiteur de fréquence calé sur la fréquence de 450 Hz.

Selon un autre mode de réalisation, le module de synchronisation est calé sur la fréquence de 450 Hz.

Le module de synchronisation est, par exemple, calé sur la fréquence de 750 Hz.

D'autres caractéristiques et avantages de la présente invention apparaîtront mieux à la lecture de la description d'un exemple de réalisation donné à titre illustratif et nullement limitatif, annexé des figures qui représentent :
- La figure 1, la séquence d'émission des impulsions pour le mode MK XA,
- La figure 2, correspond au mode Stanag 4193,
- La figure 3 schématise le_Mode S, Stanag 4193,
- La figure 4 schématise l'émission des impulsions pour le Mode 5,

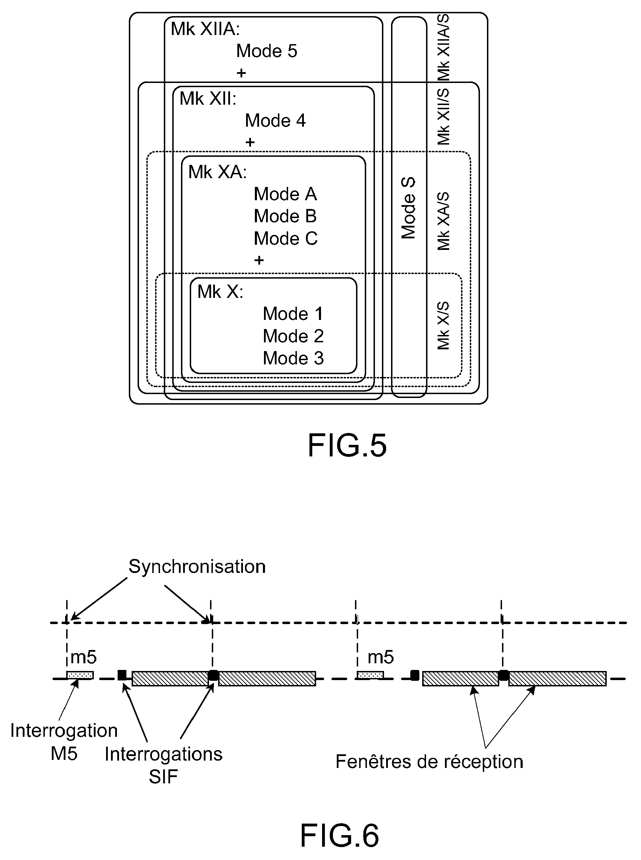

- La figure 5 représente un exemple de hiérarchisation des différents modes,
- La figure 6, un exemple de représentation des impulsions émises suivant le procédé selon l'invention,

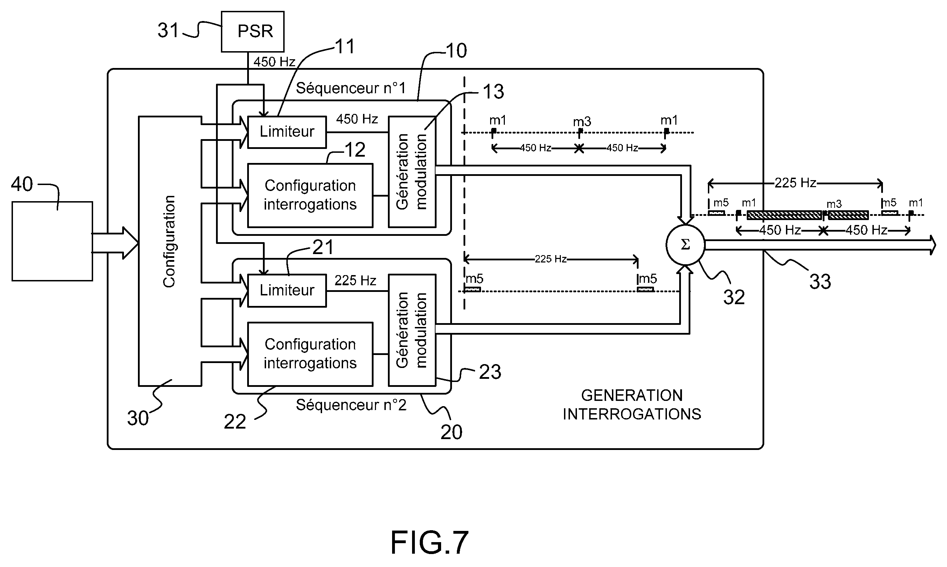

- La figure 7, un exemple d'architecture pour le dispositif selon l'invention,

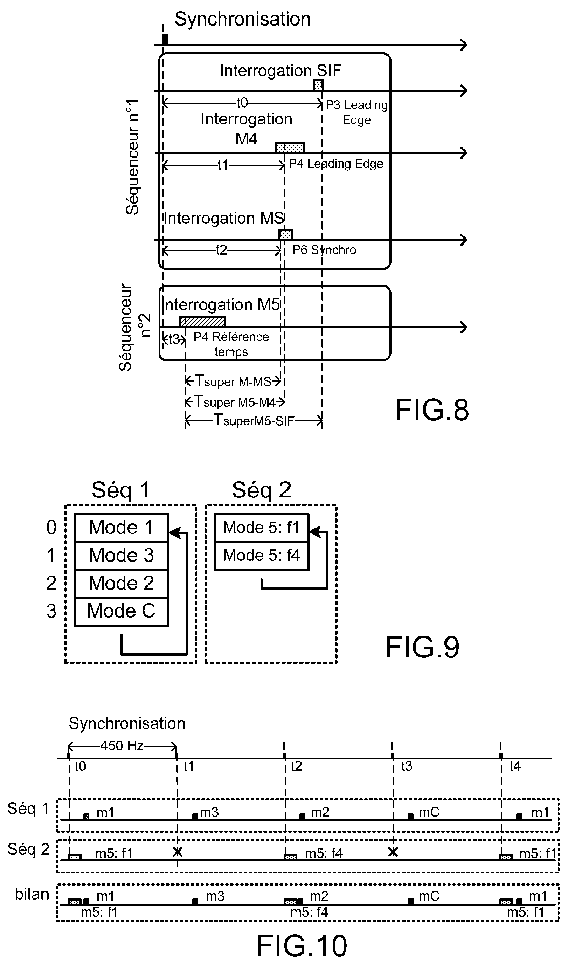

- La figure 8, les chronogrammes d'émission pour les séquenceurs du dispositif de la figure 7,
- La figure 9, une illustration des modes émis par chacun des séquenceurs, et

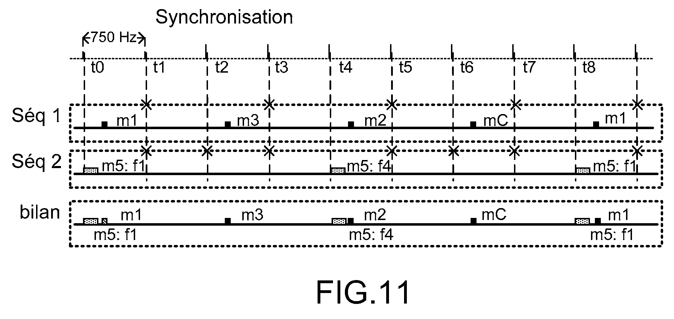

- La figure 10 et la figure 11, deux exemples illustrant le fonctionnement du dispositif selon l'invention pour deux fréquences de synchronisation.

L'idée mise en oeuvre par le procédé et le système selon l'invention repose sur les éléments suivants :
La solution consiste à combiner les possibilités offertes par le « Supermode » et le mode « Asynchrone » afin de maintenir à leurs niveaux maximums les fréquences d'interrogations des différents modes.

Pour mémoire, le séquencement des interrogations dans le schéma « supermode » exécute les étapes suivantes : à chaque synchronisation radar tr plusieurs interrogations; interrogation m5, interrogation SIF sont émises.

D'une synchronisation à l'autre, le second mode transmit peut changer, par exemple passer d'un mode SIF ou du mode M4 ou du mode MS à un autre mode.

Pour l'enchaînement des interrogations pour le mode asynchrone, à chaque synchronisation radar n'est émise qu'une interrogation M5. Une seconde interrogation, différente du mode M5, pouvant être ajoutée à n'importe quel moment, tant que les contraintes de périodicité propre à ce mode sont respectées, pendant la fenêtre de réception. Ce schéma est défini par le stanag 4193 part 5 au §3.2.6.3. Dans le cas d'une émission d'interrogation supplémentaire, il y aura fermeture de la fenêtre de réception pendant la durée de l'émission de l'interrogation, le dispositif interrogation IFF ne pouvant pas émettre et recevoir simultanément en fonctionnement normal du dispositif.
Il est à noter que la fermeture de réception Mode 5 n'est pas pénalisante en termes de taux de décodage des réponses du fait de la très faible probabilité de la présence d'une réponse M5 pendant l'émission de l'interrogation.

Un exemple de schéma d'enchaînement des séquences d'émission selon le procédé selon l'invention est schématisé à la figure 6, pour illustrer le procédé à titre non limitatif dans le cas d'un équipement interrogateur IFF équipé d'une antenne tournante.

Dans cet exemple, deux interrogations SIF (tous les modes m1, m3) sont émises pour une interrogation M5. La synchronisation a pour fonction de caler toutes les interrogations y compris celles qui sont émises à leur fréquence maximale autorisée par le Stanag. Dans le cas représenté sur la figure 6, le procédé a une première synchronisation faite à une première fréquence de synchronisation F1 correspondant à l'interrogation dans le format M5, et une deuxième synchronisation à une fréquence F2 correspondant à la fréquence des interrogations SIF. On remarque sur ce schéma que le dispositif doit fermer sa fenêtre de réception à un instant tf afin de permettre l'émission des impulsions dans le mode SIF.

Ainsi, si la fréquence de synchronisation est à 450 Hz, les interrogations SIF sont émises à cette fréquence et les interrogations mode 5 à 225 Hz du fait de la présence d'un limiteur de fréquence. De cette façon, les deux modes SIF et M5 sont émis à leur fréquence maximale autorisée par le Stanag.

Etant donné que dans le Stanag, en supermode le positionnement des interrogations Mk XII/S se fait par rapport à l'interrogation M5, alors le système selon l'invention va comporter deux séquenceurs ; un pour le Mk XII/S et le deuxième pour le M5.

La figure 7 représente un exemple d'architecture du dispositif selon l'invention permettant la génération d'un mode combinant au moins deux modes selon l'invention.

Le dispositif comporte un premier séquenceur 10 comprenant par exemple un limiteur 11 de fréquence calé à une première fréquence F1, qui correspond à la fréquence d'émission d'un premier mode M1, par exemple le mode 5, un module 12, 13 de configuration du premier mode, qui comprend notamment les caractéristiques du mode, le mode 5 dans cet exemple, le rythme auquel les impulsions sont émises, le nombre de répétitions de la séquence pour un cycle d'interrogation donné. Le dispositif comporte un deuxième séquenceur 20 comprenant des éléments similaires adaptés à un deuxième mode, dans l'exemple, le mode Mk XII/S, un limiteur de fréquence 21 à une deuxième fréquence F2, un module de configuration 22, 23 des interrogations pour ce deuxième mode.

Le dispositif d'interrogation comporte un module 30 de configuration, un additionneur 31 recevant les signaux ou impulsions émis par les deux séquenceurs, un dispositif 32 fournissant la fréquence de synchronisation Fs qui est relié aux deux séquenceurs 10, 20 par une liaison physique par exemple, et une sortie 33 qui émet un signal constitué des deux modes combinés tel que schématisé à la figure 7.

Les deux séquenceurs 10, 20 reçoivent le même signal de synchronisation TS, la même fréquence Fs. Il convient donc de positionner correctement les interrogations Mk XII/S et M5 pour réaliser le procédé selon l'invention.

Le bloc 30 de configuration a pour fonction de réaliser l'interface avec le microprocesseur 40 de supervision de l'équipement en mettant à disposition de celui-ci un espace mémoire accessible via un bus adresses/données. L'espace mémoire proposé permet de recevoir les modes (nb modes, nature des modes, codage, calage, informations à transmettre, etc.) d'interrogations à destination de chacun des séquenceurs, ainsi que la PRF maximale admissible associée à ces modes.

Les sous-ensembles 12 et 22 de chacun des séquenceurs 10 et 20, ou bloc de configurations interrogations, ont une fonction identique. Un sous-ensemble ou module 12, 22 reçoit via le bloc de configuration 30, la définition des interrogations à produire et organise ces informations pour la mise à disposition du bloc de génération des interrogations. Il permet de passer d'un niveau mode à un niveau impulsion. En entrée, on retrouve, par exemple, le nombre de modes, la nature des modes, le codage, le calage, les informations à transmettre. En sortie, pour chacun des modes demandés, la position, la largeur, le temps de montée/descente des impulsions, si nécessaire les informations à transmettre.

Les modules 13 et 23 des séquenceurs 10 et 20 correspondent au bloc «Génération Interrogation ». Ces modules ont une fonction identique. Un module reçoit d'une part du bloc «configuration interrogations », les informations permettant la génération des impulsions (positions, largeur, temps de montée/descente, informations à transmettre, ...) constituant les modes à émettre et d'autre part, du bloc « limiteur », la périodicité des interrogations ou PRF limitée servant à cadencer les interrogations. En fonction de la nature du modulateur de l'émetteur, les modules peuvent aussi recevoir des signaux de commande de modulateur I/Q (voies en quadrature), des commandes de DDS abréviation de Direct Digital Synthesizer

Pour cela, le schéma décrit à la figure 8 montre un exemple de chronogramme des impulsions émises par une architecture du dispositif interrogateur IFF selon la figure 7, comprenant deux séquenceurs 10, 20. Sur chacun des séquenceurs, les temps t0 à t3 qui représentent le délai entre l'instant de synchronisation tr et le moment où un signal d'interrogation est émis (interrogation SIF, interrogation M4, interrogation MS, interrogation M5) sont choisis afin que lorsqu'une interrogation avec le Supermode est demandée, la position des interrogations sortant du premier séquenceur 10 (t0 à t2) et celles des interrogations sortant du deuxième séquenceur 20 (t3) réalisent le motif demandé. Des exemples de motifs d'interrogations et de séquencement sont par exemple décrits aux figures 10, 11.

Sur la figure 9 sont représentés les cycles d'émission des différents modes émis respectivement sur les deux séquenceurs 10, 20.

Sur la figure 10, un exemple est donné dans le cas d'une synchronisation à une fréquence de 450 Hz.
A chacune des impulsions de synchronisation :
- le premier séquenceur 10 émet les modes demandés (t0 à t3) et reboucle au bout de la séquence (t4). Les modes sont positionnés de façon à réaliser un motif supermode avec les interrogations m5 du deuxième séquenceur 20.
- le deuxième séquenceur 20 émet les modes demandés (t0 et t2) puis reboucle au bout de la séquence (t4). Aux instants t1 et t3, le limiteur de périodicité des interrogations PRF du deuxième séquenceur 20 agit et ne déclenche pas d'émission.

Sur la figure 11 est donné un autre exemple de mise en oeuvre du procédé et du système selon l'invention pour une fréquence de synchronisation à 750 Hz ( > max autorisé pour le Mk XA).
A chacune des impulsions de synchronisation :
- le limiteur du premier séquenceur 10 agit et ne laisse passer que 1 impulsion sur 2. Les modes demandés sont émis aux instants t0, t2, t4, t6 et le premier séquenceur 10 reboucle au bout de la séquence en t8. Les modes sont positionnés de façon à réaliser un motif supermode avec les interrogations m5 du deuxième séquenceur 20.
- le deuxième séquenceur 20 émet les modes demandés (t0 et t4) puis reboucle au bout de la séquence (t8).
Pour un interrogateur avec une vitesse d'antenne de 360°/s et une ouverture de 15°.

| tour | Modes utilisés | PRF | Nb coups au but | Identification |
|---|---|---|---|---|
| N | [m5 / m1] - m3, [m5 / m1] - m3, .... | m5 : 225 Hz | m5 : 9.3 | OK |
| | | m1 : 225Hz | m1 : 9.3 | OK |
| | | m3: 225Hz | m3: 9.3 | OK |

Dans cette configuration les résultats sont obtenus sur 1 seul tour.

Une implémentation possible de l'invention consiste à mettre en parallèle 2 séquenceurs dans la fonction numérique du dispositif IFF gérant les interrogations.
Quelle que soit la nature de l'interrogateur (VSHORAD ⇒ LORAD) et donc la valeur de la périodicité des interrogations PRF (liée à la durée de la fenêtre de réception) la solution permet de maximiser le nombre des interrogations.

L'implémentation (2 séquenceurs supportés par une seule fonction numérique) décrite précédemment peut être déclinée à des systèmes dans lesquels les interrogations MkXII et mode 5 sont gérées par 2 entités (cartes ou FPGA) distinctes. Pour ce faire, il suffit que les cartes disposent d'une même synchronisation, qu'elles soient capables de gérer la limitation de PRF et accèdent à la génération des interrogations (la problématique d'arbitrage entre les sources pour l'accès à un émetteur étant déjà traitée lors de la mise en place des 2 entités).

## Revendications

1. Dispositif d'interrogation amélioré dans un système interrogation-réponse de type IFF, ledit dispositif d'interrogation est **caractérisé en ce qu'**il comporte en combinaison au moins les éléments suivants un premier séquenceur (10) et un deuxième séquenceur (20), lesdits séquenceurs (10, 20) comprenant chacun un limiteur en fréquence (11, 21) calés respectivement sur une première fréquence F1 correspondant à un premier mode d'émission M1 et une deuxième fréquence F2 calée sur un deuxième mode d'émission M2, ledit système comporte un module de synchronisation (32) permettant la transmission simultanée au niveau du premier séquenceur (10) et au niveau du deuxième séquenceur (20) d'une même fréquence de synchronisation Fs correspondant à une périodicité des interrogations.

2. Dispositif selon la revendication 1 **caractérisé en ce que** le premier séquenceur (10) comprend un module d'émission pour le Mode 5 du stanag comprenant un premier limiteur de fréquence (11) calé sur la fréquence 225 Hz et le deuxième séquenceur (20) comprend un module d'émission pour le mode Mk XII/S, comprenant un limiteur de fréquence (21) calé sur la fréquence de 450 Hz.

3. Dispositif selon la revendication 1 **caractérisé en ce que** le module de synchronisation (32) est calé sur la fréquence de 450 Hz.

4. Dispositif selon la revendication 1 **caractérisé en ce que** le module de synchronisation (32) est calé sur la fréquence de 750 Hz.

## Patentansprüche

1. Verbessertes Abfragegerät in einem Abfrage-Antwort-System des IFF-Typs, wobei das Abfragegerät **dadurch gekennzeichnet ist, dass** es in Kombination wenigstens die folgenden Elemente umfasst: einen ersten Sequenzer (10) und einen zweiten Sequenzer (20), wobei die Sequenzer (10, 20) jeweils einen Frequenzbegrenzer (11, 21) umfassen, die jeweils auf eine erste Frequenz F1 entsprechend einem ersten Sendemodus M1 und eine auf einen zweiten Sendemodus M2 gesetzte zweite Frequenz F2 gesetzt sind, wobei das System ein Synchronisationsmodul (32) umfasst, das das gleichzeitige Übertragen, am ersten Sequenzer (10) und am zweiten Sequenzer (20), mit einer selben Synchronisationsfrequenz Fs entsprechend einer Periodizität von Abfrageelementen zulässt.

2. Gerät nach Anspruch 1, **dadurch gekennzeichnet, dass** der erste Sequenzer (10) ein Sendemodul für Stanag Modus 5 umfasst, umfassend einen auf die Frequenz 225 Hz gesetzten ersten Frequenzbegrenzer (11) und der zweite Sequenzer (20) ein Sendemodul für den Modus Mk XII/S umfasst, umfassend einen auf eine Frequenz von 450 Hz gesetzten Frequenzbegrenzer (21).

3. Gerät nach Anspruch 1, **dadurch gekennzeichnet, dass** das Synchronisationsmodul (32) auf eine Frequenz von 450 Hz gesetzt ist.

4. Gerät nach Anspruch 1, **dadurch gekennzeichnet, dass** das Synchronisationsmodul (32) auf eine Frequenz von 750 Hz gesetzt ist.

## Claims

1. An improved interrogation device in a interrogation-response system of the IFF type, said interrogation device being **characterised in that** it comprises in combination at least the following elements: a first sequencer (10) and a second sequencer (20), said sequencers (10, 20) each comprising a frequency limiter (11, 21) respectively set to a first frequency F1 corresponding to a first transmission mode M1 and a second frequency F2 set to a second transmission mode M2, said system comprises a synchronisation module (32) allowing the simultaneous transmission at said first sequencer (10) and at said second sequencer (20) of the same synchronisation frequency Fs corresponding to a periodicity of the polls.

2. The device according to claim 1, **characterised in that** said first sequencer (10) comprises a transmission module for STANAG Mode 5, comprising a first frequency limiter (11) set to a frequency of 225 Hz, and said second sequencer (20) comprises a transmission module for the Mk XII/S mode, comprising a frequency limiter (21) set to a frequency of 450 Hz.

3. The device according to claim 1, **characterised in that** said synchronisation module (32) is set to a frequency of 450 Hz.

4. The device according to claim 1, **characterised in that** said synchronisation module (32) is set to a frequency of 750 Hz.
